# EUROPEAN PATENT APPLICATION

(11) **EP 2 574 007 A1**
(43) Date of publication of application: **27.03.2013**
(21) Application number: 11797629.0
(22) Date of filing: 24.06.2011
(51) Int. Cl.: H04L 29/08

(54) **METHOD AND DEVICE FOR ADDING SCHEDULE**

(30) Priority: 24.06.2010 CN 201010218312
(71) Applicant: Huawei Device Co., Ltd., Longgang District Shenzhen Guangdong 518129 (CN)
(72) Inventor: WANG, Tao, Shenzhen Guangdong 518129 (CN)
(74) Representative: Körber, Martin Hans
(86) International application number: PCT/CN2011/076253
(87) International publication number: WO 2011/160598

(57) **Abstract**

A method and a device for adding a schedule are provided. The method includes: integrating a widget application in a schedule application, and connecting the schedule application to the widget application by adding an information communication interface; and notifying, by the widget application and after a user selects and determines widget application information, that the schedule application establishes a new schedule reminder, and sending an information parameter to the schedule application. In the embodiments of the present invention, the schedule application is integrated with and connected to the widget application, and more information associated with a date may be displayed by extending the widget application, so that the schedule management of the user is convenient.

## Description

This application claims priority to Chinese Patent Application No. CN201010218312.1, filed with the Chinese Patent Office on June 24, 2010, and entitled "METHOD AND DEVICE FOR ADDING SCHEDULE", which is incorporated herein by reference in its entirety.

### FIELD OF THE INVENTION

The present invention relates to the field of communications technologies, and in particular, to a method and a device for adding a schedule.

### BACKGROUND OF THE INVENTION

With the acceleration of the rhythm of people's life, software with a function of a schedule reminder becomes a necessary part of people's busy life. Existing schedule software sets a default date of a new schedule reminder according to a date currently selected by a user when the user adds a schedule, and specific content such as a title of the schedule is entered by the user.

During the implementation of the present invention, the inventor finds that the prior art at least has the following problem.

When the schedule is added, the user cannot take other determined application information in a mobile phone as specific content such as a default title of the schedule.

### SUMMARY OF THE INVENTION

Embodiments of the present invention provide a method and a device for adding a schedule, where more information associated with a date is displayed by extending a widget application, so that the schedule management of the user is convenient.

An embodiment of the present invention provides a method for adding a schedule, which includes:
integrating a widget application in a schedule application, and connecting the schedule application, to the widget application by adding an information communication interface; and
notifying, by the widget application, and after a user selects and determines widget application information, that the schedule application establishes a new schedule reminder, and sending an information parameter to the schedule application.

An embodiment of the present invention provides a device for adding a schedule, which includes:
a first integrating and connecting module, configured to integrate a widget application, in a schedule application, and connect the schedule application to the widget application by adding an information communication interface; and
a notifying and sending module, configured to notify, by the widget application and after a user selects and determines widget application information, that the schedule application establishes a new schedule reminder, and send an information parameter to the schedule application.

An embodiment of the present invention further provides a method for adding a schedule, which includes:
integrating a widget application in a schedule application, and connecting the schedule application to the widget application by adding an information communication interface;
sending, by the schedule application, a date selected and determined by a user to the widget application;
sending, by the widget application, an information parameter corresponding to the received date to the schedule application; and
adding, by the schedule application, a schedule according to the information parameter corresponding to the date.

An embodiment of the present invention further provides a device for adding a schedule, which includes:
a second integrating and connecting module, configured to integrate a widget application, in a schedule application, and connect the schedule application to the widget application by adding an information communication interface;
a date sending module, configured to send, by the schedule application, a date selected and determined by a user to the widget application;
a Widget information sending module, configured to send, by the widget application, an information parameter corresponding to the received date to the schedule application; and
an adding module, configured to add, by the schedule application, a schedule according to the information parameter corresponding to the date.

It can be seen from the forgoing technical solutions provided by the embodiments of the present invention that, the schedule application is integrated with and connected to the widget application, and more information associated with the date may be displayed by extending the widget application, so that the schedule management of the user is convenient.

### BRIEF DESCRIPTION OF THE DRAWINGS

To illustrate the technical solutions according to the embodiments of the present invention more clearly, the accompanying drawings for describing the embodiments are introduced briefly in the following. Apparently, the accompanying drawings in the following description are some embodiments of the present invention, and persons skilled in the art may derive other drawings from the accompanying drawings without creative efforts.

FIG. 1 is a flow chart of a method for adding a schedule provided by an embodiment of the present invention;

FIG. 2 is a flow chart of a method for adding and querying a schedule provided by an embodiment of the present invention, in which an example of integrating a sports game schedule table in a widget application in a schedule application is taken;

FIG. 3a is an effect diagram of loading a widget of a sports game schedule table in a schedule application for displaying provided by an embodiment of the present invention; and FIG. 3b is an effect diagram, which is of loading a widget of a sports game schedule table in a schedule application for displaying and is after a user selects and determines the game schedule table in a widget application, provided by an embodiment of the present invention;

FIG. 4 is a schematic structural diagram of a device for adding a schedule provided by an embodiment of the present invention;

FIG. 5 is a flow chart of another method for adding a schedule provided by an embodiment of the present invention; and

FIG. 6 is a schematic structural diagram of another device for adding a schedule provided by an embodiment of the present invention.

### DETAILED DESCRIPTION OF THE EMBODIMENTS

The technical solutions of the present invention are clearly and fully described in the following with reference to the accompanying drawings. It is obvious that the embodiments to be described are a part rather than all of the embodiments of the present invention. All other embodiments obtained by persons skilled in the art based on the embodiments of the present invention without creative efforts shall fall within the protection scope of the present invention.

A widget application provides an opportunity for establishing a one-to-one relationship with a customer. By acquiring information, such as a calendar and an address book program, stored in local equipment, a user may easily jump between the service content through a standard browser. The widget application may integrate the Internet and local resources to provide brand new and personalized service experience, for example, through accessing a global positioning system function of the equipment, the widget application may provide information of more correlations and environment awareness for the user. At the same time, the widget application is easily embedded into a terminal, runs rapidly, may be presented in various forms such as a slide, a video, a map or news, and may report news for you, buy things for you and list your favorite band, and may actively bring information to you so that you need not go to a weather website by yourself. You may disorganize all the content in the "network" and rearrange according to your preference, to obtain an Internet belonging to yourself according to a form you wish to see, for example, the widget application is used to establish a personal space, which includes sports news from one website, a section from a forum, and stock information updated in real time from an authoritative financial website, such information that can only be seen by entering several websites at the same time respectively by the user in the past becomes a part of the personal space through widget applications, and a WeatherBug Widget is an example of the widget application.

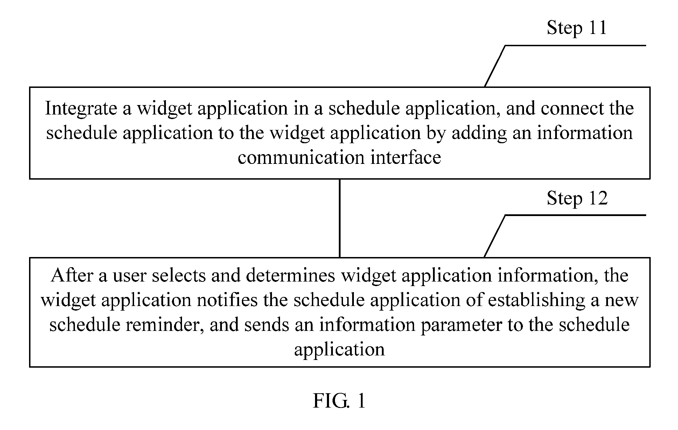

An embodiment of the present invention provides a method for adding a schedule, as shown in FIG. 1.

Step 11: Integrate a widget application, in a schedule application, and connect the schedule application to the widget application by adding an information communication interface.

Specifically, the widget application is loaded in a schedule file in a form of a lib file, and the schedule application is connected to the widget application by adding the information communication interface, to ensure that some functions of the widget application may be directly used in the schedule application. For example, in the schedule application, a game schedule table of the widget is integrated, so that the game schedule table is updated and displayed in real time when the schedule application is operated.

Step 12: After a user selects and determines widget application information, the widget application notifies the schedule application of establishing a new schedule reminder, and sends an information parameter to the schedule application, where the widget application information may be set according to a user demand, such as sports game information or weather information.

Optionally, step 13 may also be included: after the widget application notifies the schedule application of establishing the new schedule reminder and sends the information parameter to the schedule application, the schedule application takes received information parameter as a selected or default title of the schedule reminder.

Specifically, the widget application may notify, through manners such as invoking an interface or sending a notification, the schedule application of establishing the new schedule reminder, and the widget may enter information such as the time or title of the schedule reminder according to data of the widget or setting of the user. Taking a sports game for example, the widget may take the start time of the game as the time of the schedule reminder, and two parties of the game as the title of the schedule reminder.

Further, when the user needs to query a schedule, a specific schedule querying process is as follows:

After the user selects and determines a query date, the schedule application sends the date to the widget application.

The schedule application queries and displays a schedule reminder corresponding to the date, and at the same time, the widget application queries corresponding information through the received date and displays the corresponding information; specifically, after receiving the date selected by the user and sent by the schedule application, the widget application displays, in an embedded window, the information corresponding to the date, such as a game schedule table of the day.

The prior art, when querying the schedule, can only acquire a schedule reminder event from a database of schedule software, and cannot at the same time acquire valuable information, such as weather or national festivals, which is associated with the query date and recorded in a terminal. Through the provided method, the user may acquire widget information corresponding to the date in real time from an embedded window, in which the information may remind the user of the weather condition or a game schedule of the day, so that the schedule querying process of the user is convenient and the user experience is improved.

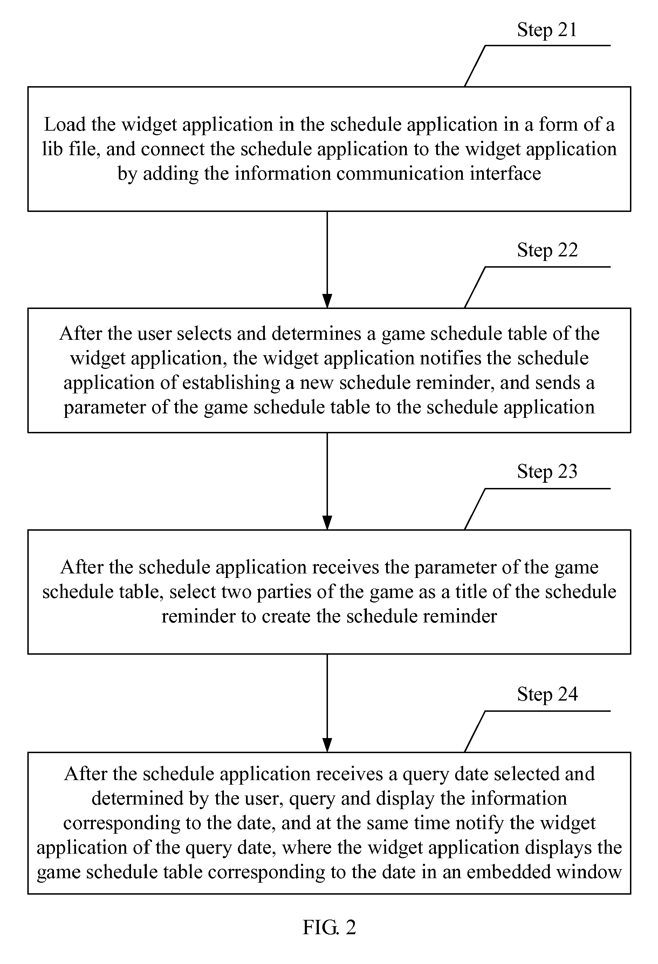

As shown in FIG. 2, in the schedule application, the sports game schedule table in the widget application is integrated, which is taken as an example for illustration, and the specific steps are as follows:

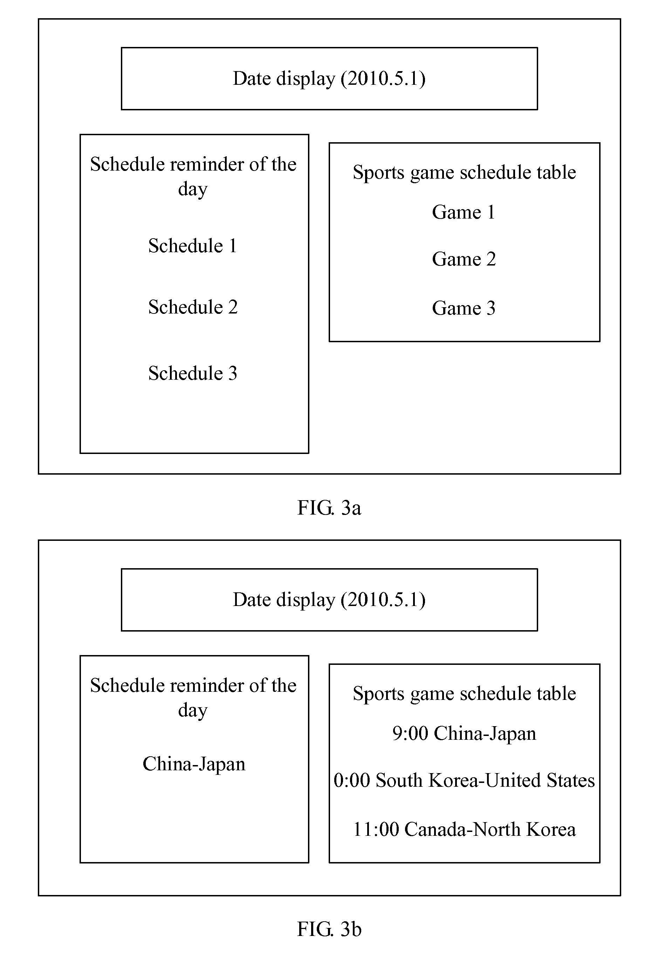

Step 21: Load the widget application in the schedule application in a form of a lib file, and connect the schedule application to the widget application by adding the information communication interface. A loaded effect diagram with an example of the widget of the sports game schedule table is shown in FIG. 3a.

Step 22: After the user selects and determines the game schedule table of the widget application, the widget application notifies the schedule application of establishing the new schedule reminder, and sends the parameter of the game schedule table to the schedule application. For example, the game schedule table includes a live broadcast game between China and Japan at 9 o'clock, a live broadcast game between South Korea and the United States at 10 o'clock, and a live broadcast game between Canada and North Korea at 11 o'clock, and after the user selects and determines "China-Japan", the widget application notifies the schedule application of establishing the new schedule reminder, and sends the parameter of "China-Japan" in the game schedule table to the schedule application.

Step 23: After the schedule application receives the parameter of the game schedule table, select the two parties of the game as the title of the schedule reminder to create the schedule reminder. For example, after the schedule application receives the parameter of "China-Japan" in the game schedule table, the two parties of the game are selected as the title of the schedule reminder to create the schedule reminder, that is, "China-Japan" is used as the title of the schedule reminder, as shown in FIG. 3b.

Step 24: After the schedule application receives the query date selected and determined by the user, query and display the information corresponding to the date, and at the same time notify the widget application of the query date. The widget application displays the game schedule table corresponding to the date in the embedded window, as shown in FIG. 3b.

Persons skilled in the art should understand that, all or a part of the processes in the method according to the embodiments may be accomplished by relevant hardware under instructions of a computer program. The program may be stored in a computer-readable storage medium. When the program is run, the process of the method according to the embodiments of the present invention is performed. The storage medium may be a magnetic disk, an optical disk, a read-only memory (Read-Only Memory, ROM), a random access memory (Random Access Memory, RAM), and the like.

In the embodiment of the present invention, the schedule application is integrated with and connected to the widget application, and a viewing function of the schedule application is extended through the widget application. Therefore, the user may view a perpetual calendar and an associated schedule event in a display interface of the schedule application, and more information associated with the date may be displayed by extending the widget application, where the widget application information may serve as default information for the user to select when the user establishes a new schedule reminder, so that the schedule management of the user is convenient.

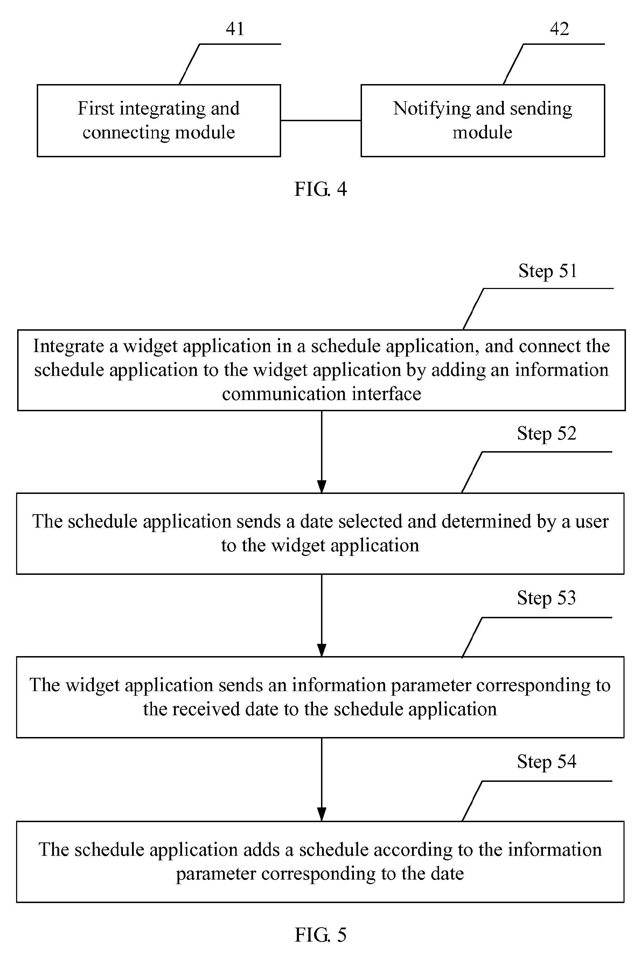

An embodiment of the present invention provides a device for adding a schedule, which may be installed in a terminal, for example, applied in the design of log management software on multiple platforms of a mobile phone or a computer. As shown in FIG. 4, the device includes:

A first integrating and connecting module 41 is configured to integrate a widget application, in a schedule application, and connect the schedule application to the widget application by adding an information communication interface.

Specifically, the widget application is loaded in a schedule file in a form of a lib file, and the schedule application is connected to the widget application by adding the information communication interface, to ensure that some functions of the widget application may be directly used in the schedule application. For example, in the schedule application, a game schedule table of the widget is integrated, so that the game schedule table is updated and displayed in real time when the schedule application is operated.

A notifying and sending module 42 is configured to, after a user selects and determines widget application information, notify, by the widget application, the schedule application of establishing a new schedule reminder, and send an information parameter to the schedule application, where the widget application information may be set according to a user demand, such as sports game information or weather information.

The device may further include a schedule application title module (not shown in FIG. 4), configured to, after the schedule application receives the information parameter sent by the notifying and sending module, take the received information parameter as a selected or default title of the schedule reminder.

Specifically, the widget application may notify, through manners such as invoking an interface or sending a notification, the schedule application of establishing the new schedule reminder, and the widget may enter information such as the time or title of the schedule reminder according to data of the widget or setting of the user. Taking a sports game for example, the widget may take the start time of the game as the time of the schedule reminder, and two parties of the game as the title of the schedule reminder.

Further, when the user needs to query a schedule, the device may further include a schedule querying module, where the schedule querying module (not shown in FIG. 4) includes:
a date sending sub-module, configured to, after the user selects and determines a query date, send, by the schedule application, the date to the widget application; and
a schedule querying sub-module, configured to query and display, by the schedule application, a schedule reminder corresponding to the date in the date sending sub-module; and
a Widget information querying sub-module, configured to query and display, by the widget application, corresponding information through the date received by the date sending sub-module.

The specific implementation manners of the processing functions of the modules included in the device have being described in the foregoing method embodiment, and are not described here again.

In the embodiment of the present invention, the schedule application is integrated with and connected to the widget application, and a viewing function of the schedule application is extended through the widget application. Therefore, the user may view a perpetual calendar and an associated schedule event in a display interface of the schedule application, and more information associated with the date may be displayed by extending the widget application, where the widget application information may serve as default information for the user to select when the user establishes a new schedule reminder, so that the schedule management of the user is convenient.

An embodiment of the present invention further provides a method for adding a schedule. As shown in FIG. 5, the method includes the following steps:

Step 51: Integrate a widget application, in a schedule application, and connect the schedule application to the widget application by adding an information communication interface.

Specifically, the widget application is loaded in a schedule file in a form of a lib file, and the schedule application is connected to the widget application by adding the information communication interface, to ensure that some functions of the widget application may be directly used in the schedule application. For example, in the schedule application, a game schedule table of the widget is integrated, so that the game schedule table is updated and displayed in real time when the schedule application is operated.

Step 52: The schedule application sends a date selected and determined by a user to the widget application, where the schedule application sends the date through a date information communication interface between the schedule application and the widget application.

Step 53: The widget application sends an information parameter corresponding to the received date to the schedule application, where the information parameter of the widget application may be set according to a user demand, such as a sports game information parameter or a weather information parameter.

Step 54: The schedule application adds a schedule according to the information parameter corresponding to the date. For example, the widget application sends a corresponding football game information parameter (22:00 Slovenia VS England) on June 23 to the schedule application, and therefore, the schedule time of 22:00 is added and the corresponding schedule title is Slovenia VS England.

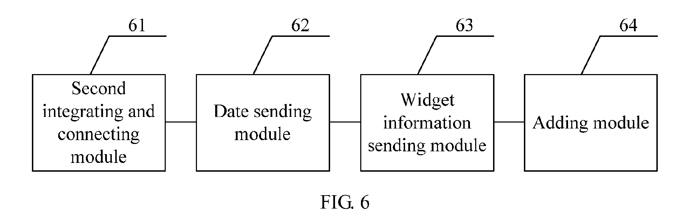

An embodiment of the present invention further provides a device for adding a schedule. As shown in FIG. 6, the device includes:

A second integrating and connecting module 61 is configured to integrate a widget application, in a schedule application, and connect the schedule application to the widget application by adding an information communication interface.

Specifically, the widget application is loaded in a schedule file in a form of a lib file, and the schedule application is connected to the widget application by adding the information communication interface, to ensure that some functions of the widget application may be directly used in the schedule application. For example, in the schedule application, a game schedule table of the widget is integrated, so that the game schedule table is updated and displayed in real time when the schedule application is operated.

A date sending module 62 is configured to send, by the schedule application, a date selected and determined by a user to the widget application, where the schedule application sends the date through a date information communication interface between the schedule application and the widget application.

The Widget information sending module 63 is configured to send, by the widget application, an information parameter corresponding to the received date to the schedule application, where the information parameter of the widget application may be set according to a user demand, such as a sports game information parameter or a weather information parameter.

The adding module 64 is configured to add, by the schedule application, a schedule according to the information parameter corresponding to the date. For example, the widget application sends a corresponding football game information parameter (22:00 Slovenia VS England) on June 23 to the schedule application, and therefore, the schedule time of 22:00 is added and the corresponding schedule title is Slovenia VS England.

In the embodiment of the present invention, the schedule application is integrated with and connected to the widget application, and a viewing function of the schedule application is extended through the widget application. Therefore, after the schedule application selects the corresponding date, the user may establish the new schedule reminder according to the widget information that is corresponding to the date and is sent by the widget application, so that the schedule management of the user is convenient.

The above description is merely exemplary embodiments of the present invention, and is not intended to limit the protection scope of the present invention. Various modifications and replacements that may be easily thought of by persons skilled in the art without departing from the technical scope of the present invention should fall within the protection scope of the present invention. Therefore, the protection scope of the present invention falls in the appended claims.

## Claims

1. A method for adding a schedule, comprising:
integrating a widget application in a schedule application, and connecting the schedule application to the widget application by adding an information communication interface; and
notifying, by the widget application and after a user selects and determines widget application information, that the schedule application establishes a new schedule reminder, and sending an information parameter to the schedule application.

2. The method according to claim 1, wherein the widget application information is set according to a user demand.

3. The method according to claim 1, wherein after the notifying, by the widget application, that the schedule application establishes the new schedule reminder, and sending the information parameter to the schedule application, the schedule application takes a received information parameter as a selected or default title of the schedule reminder.

4. The method according to any one of claims 1 to 3, further comprising a schedule querying process, wherein
after the user selects and determines a query date, the schedule application sends the date to the widget application; and
the schedule application queries and displays a schedule reminder corresponding to the date, and the widget application queries corresponding information through the received date and displays the corresponding information.

5. A device for adding a schedule, comprising:
a first integrating and connecting module, configured to integrate a widget application, in a schedule application, and connect the schedule application to the widget application by adding an information communication interface; and
a notifying and sending module, configured to notify, by the widget application and after a user selects and determines widget application information, that the schedule application establishes a new schedule reminder, and send an information parameter to the schedule application,.

6. The device according to claim 5, wherein the widget application information in the first integrating and connecting module is set according to a user demand.

7. The device according to claim 5, further comprising: a schedule application title module, configured to, after the schedule application receives the information parameter sent by the notifying and sending module, take received information parameter as a selected or default title of the schedule reminder.

8. The device according to any one of claims 5 to 7, further comprising: a schedule querying module, wherein the schedule querying module comprises:
a date sending sub-module, configured to, after the user selects and determines a query date, send, by the schedule application, the date to the widget application;
a schedule querying sub-module, configured to query and display, by the schedule application, a schedule reminder corresponding to the date in the date sending sub-module; and
a Widget information querying sub-module, configured to query and display, by the widget application, corresponding information through the date received by the date sending sub-module.

9. A method for adding a schedule, comprising:
integrating a widget application in a schedule application, and connecting the schedule application to the widget application by adding an information communication interface;
sending, by the schedule application, a date selected and determined by a user to the widget application;
sending, by the widget application, an information parameter corresponding to the received date to the schedule application; and
adding, by the schedule application, a schedule according to the information parameter corresponding to the date.

10. A device for adding a schedule, comprising:
a second integrating and connecting module, configured to integrate a widget application, in a schedule application, and connect the schedule application to the widget application by adding an information communication interface;
a date sending module, configured to send, by the schedule application, a date selected and determined by a user to the widget application;
a Widget information sending module, configured to send, by the widget application, an information parameter corresponding to the received date to the schedule application; and
an adding module, configured to add, by the schedule application, a schedule according to the information parameter corresponding to the date.
